# EUROPEAN PATENT APPLICATION

(11) **EP 4 428 476 A1**
(43) Date of publication of application: **11.09.2024**
(21) Application number: 22924989.1
(22) Date of filing: 12.12.2022
(51) Int. Cl.: F26B 21/00, C21D 1/00, F26B 25/00, F27D 17/00

(54) **HOT AIR SUPPLY DEVICE, HOT AIR SUPPLY METHOD, AND STEEL MANUFACTURING METHOD**

(30) Priority: 03.02.2022 JP 2022015467
(71) Applicant: JFE Steel Corporation, Tokyo 100-0011 (JP)
(72) Inventor: KUROKI Takashi, Tokyo 100-0011 (JP); YOSHIDA Ryo, Tokyo 100-0011 (JP); KIJIMA Hideo, Tokyo 100-0011 (JP)
(74) Representative: Grünecker Patent- und Rechtsanwälte PartG mbB
(86) International application number: PCT/JP2022/045658
(87) International publication number: WO 2023/149085

(57) **Abstract**

Provided is a hot-air supply technology capable of supplying hot air with high energy efficiency, low cost, and high temperature control accuracy. A device includes a heat pump that preheats a gas having a temperature lower than a preset temperature required for a drying process for a steel material or a steel sheet, thereby generating hot air; heating means that heats heating a gas for the drying process that includes the hot air generated by the heat pump; and temperature control means that controls a temperature of the gas for the drying process, in which a low-temperature-side heat source of the heat pump is a refrigerant that has directly or indirectly absorbed heat by cooling the steel material or the steel sheet. The device further preferably includes a control unit that controls, based on a hot-air supply temperature and a hot air volume that are required for the drying process, a temperature and a flow rate of the hot air to be preheated by the heat pump, and an amount of energy to be used by the heating means that heats the gas for the drying process up to the required hot-air supply temperature, taking into consideration loss of energy that occurs in a path from a source of generation of the energy in a business facility to a supply destination of the energy, so as to reduce net energy consumption.

## Description

### Technical Field

The present invention relates to a hot-air supply device and hot-air supply method for heating gas, such as air, with improved energy efficiency in cooling and drying a steel material or a steel sheet, and a method for producing steel using such a hot-air supply method. Note that "hot air" in this invention refers to heated gas, such as heated air, and shall not be distinguished by its temperature.

### Background Art

Conventionally, a device for drying a steel material or a steel sheet is typically supplied with hot air by a well-known hot air generating heater based on an electrical heating scheme, or a device that indirectly heats gas, such as air, using steam. The hot air generating heater is used such that it increases the temperature of gas at room temperature to a desired temperature either directly or through resistance heating or induction heating. Thus, the power consumption of the hot air generating heater is high. Meanwhile, when the gas is indirectly heated using steam to reach a desired temperature, the amount of the steam used is also large. From the viewpoint of energy saving, therefore, a reduction in power consumption or in the amount of the steam used is required

To address such problems, a technology of using a heat pump as an energy-saving device is disclosed. For example, Patent Literature 1 discloses a technology for supplying hot air with highly accurate temperature control, little energy loss, and low costs, using a heat pump.

### Citation List

### Patent Literature

Patent Literature 1: Japanese Patent Laid-Open No. 2010-185649

### Summary of Invention

### Technical Problem

The above conventional technology has the following problems.

It is considered that a heat pump may be utilized for a drying device for a steel material or a steel sheet by applying the technology disclosed in Patent Literature 1. However, the heat capacity of a heat pump is too low to be used for a hot-air supply device for use in a steel mill, and it is thus not easy to stably control the temperature with the heat pump. Therefore, it is difficult to use such a heat pump directly as a hot-air supply device for a drying process on a steel material or a steel sheet that requires a strict temperature setting. Further, since the performance of the heat pump is affected by changes in, for example, the temperature of a low-temperature-side heat source of the heat pump, the stability of the heat pump at start-up has not been improved.

Furthermore, when a plant that is the source of generation of steam, and a plant that is the supply destination of the steam are far apart, such as in a steel mill, it is necessary to consider the energy loss (or steam loss) that may occur during the transport of the steam. It is required to reduce the net energy consumption.

The present invention has been made in view of the above circumstances, and it is an object of the present invention to provide a hot-air supply device and method that can supply hot air with high energy efficiency, low cost, and high-temperature control accuracy. Furthermore, it is another object of the present invention to provide a method for producing steel using such a hot-air supply method.

### Solution to Problem

A hot-air supply device according to the present invention for solving the above problems and for achieving the above objects includes: a heat pump that preheats a gas having a temperature lower than the preset temperature required for a drying process for a steel material or a steel sheet, thereby generating hot air; a heating means that heats a gas for the drying process that includes the hot air generated by the heat pump; and a temperature control means that controls a temperature of the gas for the drying process, characterized in that a low-temperature-side heat source of the heat pump is a refrigerant that has directly or indirectly absorbed heat by cooling the steel material or the steel sheet.

The hot-air supply device according to the present invention is considered to have more preferable solutions as follows.
(a) The hot-air supply device further includes a first control unit that controls, based on a hot-air supply temperature and hot air volume that are required for the drying process, a temperature and a flow rate of the hot air to be preheated by the heat pump, and an amount of energy to be used by the heating means that heats the gas for the drying process up to the required hot-air supply temperature, in view of an energy loss that occurs in a path from a source of generation of the energy in a business facility to a supply destination of the energy, so as to reduce net energy consumption.
(b) The low-temperature-side heat source of the heat pump is a refrigerant that has indirectly absorbed heat by cooling the steel material or the steel sheet via a heat exchanger, and the device further includes a flow-channel switching portion that switches flow channels for a heating medium in a heating-medium flow channel between the heat exchanger and the heat pump; a measurement portion that measures an inlet heating-medium temperature Tci of the heating medium that enters the heat pump through the heating-medium flow channel; and a second control unit that performs, based on T_{Ci} measured by the measurement portion, feedback control or feedforward control on a flow rate at the flow-channel switching portion so that T_{Ci} ≤ Tc is satisfied, where Tc is an upper limit of the inlet heating-medium temperature.
(c) The heating means is a heat exchanger that exchanges heat with steam, and the temperature control means controls the temperature based on one or more in combination selected from a flow rate of the steam, operating power for the heat pump, and a flow rate of the gas having a temperature lower than the preset temperature to be mixed with the gas for the drying process.

A hot-air supply method according to the present invention for solving the above problems and achieving the objects includes a first step of preheating a gas having a temperature lower than a preset temperature required for a drying process for a steel material or a steel sheet by a heat pump, thereby generating hot air; and a second step of heating a gas for the drying process that includes the hot air generated in the first step while controlling a temperature of the hot air, characterized in that in the first step, a refrigerant that has absorbed heat by cooling the steel material or the steel sheet is directly or indirectly used as a low-temperature-side heat source of the heat pump.

The hot-air supply method according to the present invention is considered to have more preferable solutions as follows.

(d) The hot-air supply method further includes controlling, based on a hot-air supply temperature and hot air volume that are required for the drying process, a temperature and a flow rate of the hot air to be preheated by the heat pump, and an amount of energy to be used in the second step of heating the gas for the drying process up to the required hot-air supply temperature, in view of an energy loss that occurs in a path from a source of generation of the energy in a business facility to a supply destination of the energy, so as to reduce net energy consumption.

(e) In the first step, a refrigerant that has absorbed heat by cooling the steel material or the steel sheet is indirectly used as the low-temperature-side heat source of the heat pump via a heat exchanger, a flow-channel switching portion that switches flow channels for a heating medium in a heating-medium flow channel between the heat exchanger and the heat pump is provided, and an inlet heating-medium temperature Tci of the heating medium that enters the heat pump through the heating-medium flow channel is measured, and feedback control or feedforward control is performed on a flow rate at the flow-channel switching portion so that T_{Ci} ≤ Tc is satisfied, where Tc is an upper limit of the inlet heating-medium temperature.

(f) In the second step, steam is used as the heating means, and the temperature of the hot air is controlled based on one or more of a flow rate of the steam, operating power for the heat pump, and a flow rate of the gas having a temperature lower than the preset temperature to be mixed with the gas for the drying process.

A method for producing steel according to the present invention includes a step of performing a drying process on a steel material or a steel sheet by generating hot air for the drying process using the foregoing hot-air supply method.

### Advantageous Effects of Invention

The hot-air supply device and the hot-air supply method according to the present invention can provide a hot-air supply device and method that can supply hot air with high energy efficiency, low cost, and high-temperature control accuracy, using a heat pump and heating means. In addition, reducing the net energy consumption can contribute to saving energy in the entire business facility, such as a steel mill.

Further, the method for producing steel according to the present invention can produce an environmentally-friendly steel material or steel sheet with saved energy.

### Brief Description of Drawings

FIG. 1(a) is a block diagram showing an overview of a hot-air supply device according to an embodiment of the present invention, and FIG. 1(b) is a block diagram showing an overview of a hot-air supply device according to another embodiment.
FIG. 2 is a facility configuration diagram showing an overview of the hot-air supply device according to another embodiment of the present invention.
FIG. 3 is a block diagram showing an overview of a conventional hot-air supply device.

### Description of Embodiments

Embodiments of the present invention will be specifically described below. Note that the drawings are only schematic and may therefore differ from the actual ones. In addition, the following embodiments only show examples of a device and a method for embodying the technical idea of the present invention. Thus, the configuration of the present invention is not limited to the one described below. That is, the technical idea of the present invention can be modified in various ways within the technical scope recited in the claims.

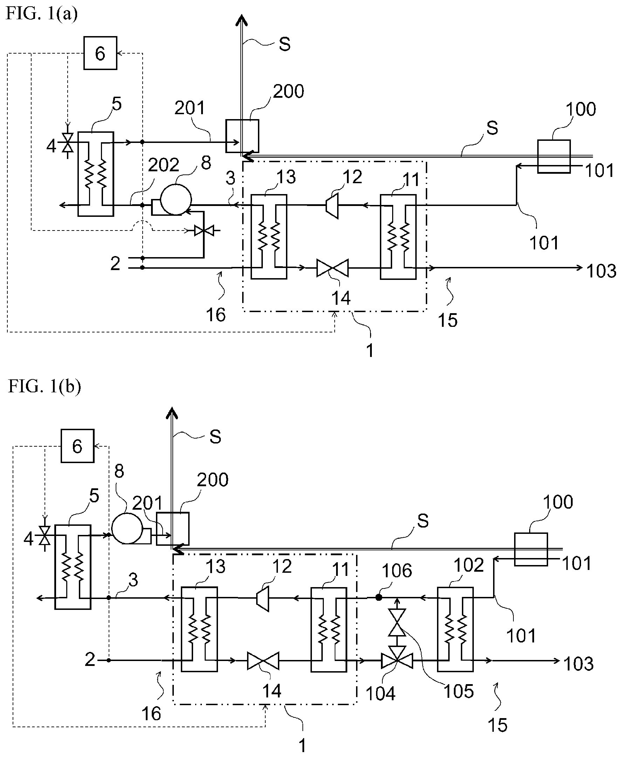

FIG. 1 is a block diagram schematically showing an overview of a hot-air supply device according to an embodiment of the present invention. As shown in FIGs 1(a) and 1(b), the production process of a steel sheet S may continuously perform a water cooling step 100 of water cooling the steel sheet S having a high temperature and a drying step 200 of drying the steel sheet wet with water. FIG. 1(a) shows an overview of a hot-air supply device according to an embodiment of the present invention. The hot-air supply device of this embodiment includes, for example, a heat pump 1 that preheats air 2 as a gas having a temperature lower than the preset temperature of hot air 201, which is required for a drying process for the steel sheet S, to generate preheated hot air 3; a heat exchanger 5 with steam 4 as a heating means for a gas 202 for the drying process including the preheated hot air 3 generated by the heat pump 1; and a temperature control means 6 that controls the temperature of the hot air 201, which is generated by heating the gas 202 for the drying process, to the preset temperature.

For example, after the preheated hot air 3 having a temperature lower than the desired preset temperature of hot air is generated by the heat pump 1, the preheated hot air 3 is heated to a higher temperature. Then, the temperature of the resulting hot air is controlled by the temperature control means 6 to the preset temperature of the hot air 201 required for the drying process for the steel sheet S. Electricity or steam, for example, can be used as the heating means. Since the heating means has only to increase the temperature of the preheated hot air 3 to the preset temperature, the energy consumption can be reduced. Since the temperature rise width of the heating means is also small, it is possible to perform temperature control to achieve the preset temperature with higher accuracy than when the heat pump 1 is used alone.

The temperature of the preheated hot air 3 generated by the heat pump 1 is preferably set in the range that allows prompt and precise responsiveness to be exhibited in accordance with the ability of the heating means. When the temperature of the preheated hot air 3 generated by the heat pump 1 is higher than the preset temperature of the drying process, the preheated hot air 3 may be mixed with the air 2 for cooling purposes to be used as the gas 202 for the drying process. When the volume of the preheated hot air 3 generated by the heat pump 1 is insufficient to perform the drying process 200, the preheated hot air 3 may be additionally mixed with the air 2 to be used as the gas 202 for the drying process. Although air is used as the gas 202 for the drying process in the above example, nitrogen or inert gas may also be used.

The temperature control means 6 may perform feedback control based on the temperature of the hot air 201 heated by the heating means. Alternatively, the temperature control means 6 may control the heating means based on the temperature of the preheated hot air 3 generated by the heat pump 1 or the temperature of the gas 202 for the drying process, or may control the heating means based on the temperature of the air 2 at an inlet on the high-temperature side 16 of the heat pump 1, for example, or based on two or more of the temperatures described above.

A low-temperature-side heat source 15 of the heat pump 1 is a refrigerant that has directly or indirectly absorbed heat generated in the cooling process 100 for the steel material or the steel sheet in the same plant as of the process that uses hot air (e.g., the drying process). Gas or liquid can be used as the refrigerant. The refrigerant is preferably a liquid that has been used for the cooling process and thus has an increased temperature. In particular, water is preferably used. For example, as shown in FIG. 1(a), the low-temperature-side heat source 15 of the heat pump 1 is a coolant 101 (cooling water) that has cooled the steel sheet S, and is preferably the one that utilizes the heat of the coolant 101 that has absorbed the heat of the steel sheet S. When a liquid that is excellent in both heat capacity and heat-transfer performance, such as water, is used as the low-temperature-side heat source 15 of the heat pump 1, the size of the heat pump 1 can be reduced compared to a gas heat source. Moreover, since the effect of cooling the coolant 101, which has absorbed the heat of the steel sheet S, is also provided, it is possible to reduce the heat load on a conventional cooling-water cooling device (a cooling tower 103).

It is also possible to provide a sensor that measures the gas temperature at the inlet on the high-temperature side 16 of the heat pump 1, a sensor that measures the gas temperature at an outlet on the high-temperature side 16 of the heat pump 1, a sensor that measures the temperature at an inlet of the low-temperature-side heat source 15 (cold water) of the heat pump 1, and a first control unit that controls the operating power for the heat pump 1 based on the temperature measurement results of the sensors. Even when there is a change in the temperature at the inlet of the low-temperature-side heat source 15 (cold water) of the heat pump 1 or of the high-temperature side 16 of the heat pump 1, the heat pump 1 can generate the preheated hot air 3 at a stable temperature. This can more stably set the temperature of the hot air 201, which is generated by the heating means, such as steam, in the following step, to the preset temperature.

The hot-air supply method according to the example in FIG. 1(a) includes drying moisture on the surface of the steel sheet S in the drying step 200 provided after the water-cooling step 100. In the drying step 200, the hot air 201 is supplied to dry the steel sheet S. The air 2 drawn in by a blower 8 is fed into the heat pump 1, and the preheated hot air 3 heated by the heat pump 1 is heated by the indirect heating device 5 (the heat exchanger) by the steam 4 so as to reach the preset temperature of the hot air 201. The temperature control means 6 is provided to control the amount of steam and thus control the temperature of the generated hot air 201 to the preset temperature. The hot air 201 supplied in the drying step 200 is sprayed to the wet steel sheet S that has been subjected to the water-cooling step 100 so that a drying process is performed on the steel sheet S. Performing the drying process appropriately can prevent the occurrence of failures resulting from drying failures in steps following the drying step 200.

The heat pump 1 includes a typical evaporator 11 (heat sink), a compressor 12, a condenser 13 (heat radiator), and an expansion valve 14. In the example of FIG. 1(a), drainage water 101, which has cooled the steel sheet S in the water-cooling step 100 and thus has an increased temperature, is directly used as the low-temperature-side heat source 15 (cold water), to utilize exhaust heat. The circulating cooling water 101 is partially utilized as the low-temperature-side heat source 15 (cold water), and the cooling water with heat removed by the evaporator 11 (heat sink) is returned as the original circulating cooling water 101. Since the cooling water has a decreased temperature, it can reduce the load on the cooling tower. Meanwhile, as shown in FIG. 1(b), it is also possible to use a heat exchanger 102 to exchange heat between the drainage water 101, which has been used in the water-cooling step 100 and thus cooled, and circulating water as the low-temperature-side heat source 15 of the heat pump 1 so as to indirectly use the heat of the drainage water 101. This is because if the properties of cooling water to be used in the cooling process for the steel sheet are unsuitable (dirty) to be directly used by the heat pump 1, directly using such cooling water would result in adverse effects, such as corrosion or clogging of the evaporator 11.

When the heat exchanger 102 is provided, it is possible to provide a flow-channel switching portion (three-way valve 104 or a bypass valve) in a heating-medium flow channel between the heat exchanger 102 and the heat pump 1, and control the temperature of the fluid to maximize the performance of the heat pump 1.

For example, a measurement portion, such as a thermocouple 106, is provided to measure the inlet heating-medium temperature T_{Ci} of a heating medium that enters the heat pump through the heating-medium flow channel. Based on T_{Ci} measured by the measurement portion, a second control unit performs feedback control or feedforward control on the flow rate at the flow-channel switching portion so that T_{Ci} ≤ Tc is satisfied, where Tc is the upper limit of the inlet heating-medium temperature. In response to the control of the second control unit, the flow-channel switching portion switches flow channels for a heating medium in the heating-medium flow channel between the heat exchanger 102 and the heat pump 1. As the second control unit controls the flow rate at the flow-channel switching portion based on the actual measurement value, the fluid temperature can be controlled with high accuracy.

Note that when a fluid is caused to bypass by the flow-channel switching portion such that the fluid does not pass through the heat exchanger 102, pressure loss in the bypass channel is smaller than pressure loss in the channel of the heat exchanger. Thus, the flow rates in the two channels do not necessarily become constant. Therefore, a flow control valve 105 may be provided to achieve constant flow rates in the two channels. The valve opening position of the flow control valve may be set in advance, or may be subjected to feedback control or feedforward control of the second control unit. Accordingly, it is possible to reduce the fluctuation in the flow rate regardless of which is controlled by the flow-channel switching portion between the flow channels and the flow rates, thus controlling the fluid temperature with even higher accuracy.

Note that the first control unit and the second control unit may be either physically different components or the physically same components. For example, the first control unit and the second control unit may be computers.

An inlet-side temperature sensor that measures the temperature of the cold water 15 and a flowmeter that measures the flow rate of the cold water 15 are provided in a supply pipe for the low-temperature-side heat source 15 of the heat pump 1. It is also possible to measure the pressure at each of the inlet and the outlet of the evaporator 11 (heat sink) to calculate the flow rate from the pressure difference and the structure of the evaporator 11.

The condenser 13 (heat radiator) is connected to a suction port through which the air 2 in the plant is fed by the blower 8, and also connected to a preheated-hot-air supply port which supplies the preheated hot air 3 heated with the thermal energy obtained by heat exchange at the condenser 13 (heat radiator). The suction port is provided with a temperature sensor that measures the temperature of the air 2, while the preheated-hot-air supply port is provided with a temperature sensor that measures the temperature of the preheated hot air 3. The respective temperature sensors that measure the temperatures of the air 2 and the preheated hot air 3 are preferably connected to the temperature control means 6. In addition, the blower 8 may be positioned to feed the air 2 into the heat pump 1. Alternatively, the blower 8 may be arranged between the heat pump 1 and heating means as shown in FIG. 1(a), or arranged at a position following the heating means as shown in FIG. 1(b).

Data obtained from the respective sensors that measure the temperature and the flow rate are used by the temperature control means 6 to control the heating amount of the heating means, for example, to control the flow rate of steam, control the drive of the heat pump 1, and control the volume of the air 2 to be mixed with the gas 202 for the drying process. It is possible to perform feedback control and feedforward control either alone or in combination. For example, to control the drive of the heat pump 1, it is possible to perform feedback control by calculating the temperature gap between the actual measured temperature of the preheated hot air 3 and the preset temperature of the preheated hot air 3, and calculating the amount of power of the heat pump 1 using the calculation result and then outputting it, or perform feedforward control by calculating the amount of power of the heat pump 1 from the temperature and the flow rate on the inlet side of the low-temperature-side heat source 15 (cold water) and the temperature of the sucked air. For such control, typical PID control or inverter control may be used, for example.

To control the drive of the heat pump 1, one or both of the compressor 12 and the expansion valve 14 may be used. The temperature of the preheated hot air 3 to be generated by the heat pump 1 is preferably set to allow the overall energy efficiency to be high based on its air volume and the output of the indirect heating device 5. Herein, "to allow the overall energy efficiency to be high" means to reduce or minimize the net energy consumption required for the drying process, for example, the energy consumption converted into that of town gas.

The indirect heating device 5, which uses the steam 4 for heating the preheated hot air 3 to the preset temperature, is provided downstream of the preheated-hot-air supply port. Thus, the hot air 201 for drying the steel sheet subjected to the water-cooling step 100 is supplied through the indirect heating device 5. It is preferable to provide a means for measuring the temperature and the flow rate on each of the inlet side and the outlet side of the indirect heating device 5 so as to control the supply amount of steam based on the results of the measurement. As the control method, feedback control and feedforward control may be used either alone or in combination.

Since the hot air 201 is obtained by heating the gas 202 for the drying process including the preheated hot air 3, it is possible to reduce the amount of steam used as compared to when the air 2 at room temperature is heated to the preset temperature using the steam 4. Thus, energy saving can be achieved. Further, even when the preset temperature of the hot air 201 required for the drying process is too high to be obtained by the heat pump 1, the hot air 201 having the required preset temperature can be obtained at a low cost. The hot air 201 having the preset temperature can be generated by heating the preheated hot air 3 obtained. This is done in combination with using the indirect heating device 5, which uses the steam 4, also improving the controllability at start-up.

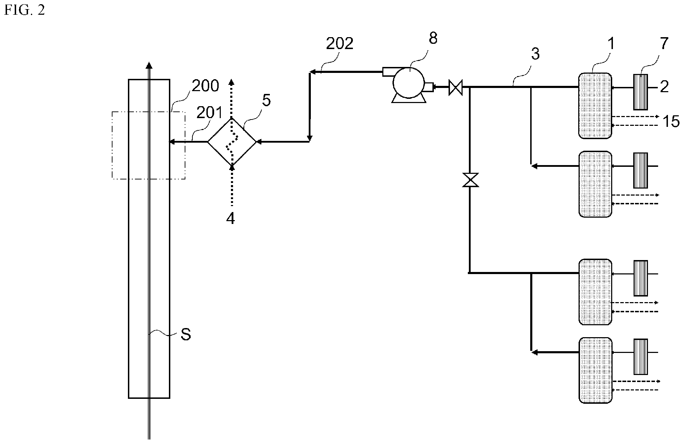

FIG. 2 shows an overview of a facility configuration of a hot-air supply device according to another embodiment of the present invention. As shown in FIG. 2, the number of heat pumps 1 to generate the preheated hot air 3 may be determined in accordance with the capacities of the respective heat pumps 1 as well as the flow rate and temperature required for the hot-air supply device. In the example of FIG. 2, the air 2 is sucked into each heat pump 1 through respective filters 7. The preheated hot air 3 heated by the heat of a liquid of the low-temperature-side heat source 15 of each heat pump 1 is collected into the blower 8, and is then sent to the heat exchanger 5 as the gas 202 for a drying process. The drying step 200 is performed by a drying device arranged on a pass line for the steel sheet S, with the hot air 201 heated to the preset temperature by the heat exchanger 5 using the steam 4.

The steam 4 used as the heating means is transported to the hot-air supply device, which is the supply destination, for performing a drying process on the steel sheet S from the source of generation of the steam in a business facility, such as a steel mill. If the transport distance is long, energy loss, that is, steam loss will occur. Regarding electricity used as the heating means and electricity used for the heat pump, transmission loss may also occur depending on the distance from an electric power plant. In order to obtain the hot-air supply temperature and its volume that are required for a drying process, it is preferable that the first control unit, which is prepared separately, set the operating conditions of the heat pump 1, the amount of steam used for the heat exchanger as the heating means, the volume of the air 2 to be mixed with the gas 202 for the drying process, and the like either alone or in combination so as to reduce the net energy consumption, taking into consideration altogether the temperature and the flow rate of the hot air to be recovered by the heat pump 1, the amount of the steam, for example, as the energy of the heating means, loss of energy that occurs in a path from the source of generation of the energy to its supply destination, and information from each sensor.

A method for producing steel including a drying process on a steel material or a steel sheet using the hot-air supply method of this embodiment can efficiently use energy and produce an environment-friendly steel material or steel sheet. Specifically, the drying process is performed by recovering heat of a refrigerant used in a cooling process for the steel material or the steel sheet; heating a gas for the drying process to obtain hot air; and further heating the hot air to a preset temperature using a heating means, such as steam, to generate a gas for the drying process.

### Example

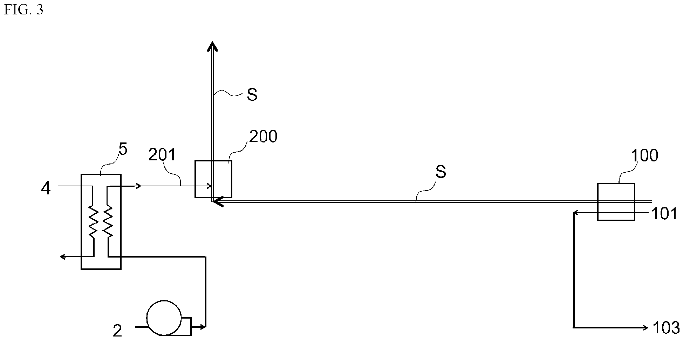

The hot-air supply device of the embodiment shown in FIG. 1(b) was constructed. The steel sheet S in a steel mill was subjected to a water-cooling process and then to a drying process. The preset temperature and the air volume of the hot air 201 in the drying step 200 for the steel sheet S were set to 85 to 95°C and 4.3 to 5.0 Nm³/h, respectively. As the heat pump 1, a heat pump having a power consumption of 15 to 24 kW and an energy consumption efficiency (COP) on the high-temperature side 16 of about four was used, and the air 2 sucked into the high-temperature side 16 of the heat pump 1 had a temperature of 10 to 40°C. The cooling water 101 after the water-cooling process for the steel sheet S to be used for the low-temperature-side heat source 15 of the heat pump 1 had a temperature of 15 to 35 °C. The energy required for the operation of the heat pump 1, the energy gain, the steam 4 supplied to the heat exchanger 5, and steam loss associated with the transport of the steam were evaluated as the net energy, in terms of the required amount of town gas, for example, based on the foregoing temperature conditions and the air volume required for the drying process. Then, the device was operated for one month while the operating conditions of the heat pump 1 and the steam 4 were controlled to minimize the net energy consumption. As a comparative example, a device configuration shown in FIG. 3 was used, and the device was operated for one month while hot air required for a drying process was entirely obtained through heating with steam.

It was found that applying this embodiment can reduce the net energy consumption of the comparative example by about 60%, and thus can improve heat utilization efficiency. In addition, it was found that the comparative example in FIG. 3 requires more power to cool cooling water after a water-cooling step for the steel sheet S, in a cooling tower.

### Industrial Applicability

According to the present invention, it is possible to use energy more efficiently than with the conventional technology, and produce an environment-friendly steel material or steel sheet. Thus, the present invention is industrially advantageous.

### Reference Signs List

- 1: heat pump
- 2: air
- 3: preheated hot air
- 4: steam
- 5: indirect heating device (heat exchanger)
- 6: temperature control means
- 7: filter
- 8: blower
- 11: evaporator (heat sink)
- 12: compressor
- 13: condenser (heat radiator)
- 14: expansion valve
- 15: low-temperature-side heat source (cold water)
- 16: high-temperature side
- 100: water-cooling step (cooling process)
- 101: cooling water (or coolant)(drainage water)
- 102: heat exchanger
- 103: cooling tower
- 104: three-way valve
- 105: flow control valve
- 106: thermocouple
- 200: drying step (drying process)
- 201: hot air
- 202: gas for drying process
- S: steel sheet

## Claims

1. A hot-air supply device comprising:
a heat pump that preheats a gas having a temperature lower than a preset temperature required for a drying process for a steel material or a steel sheet, thereby generating hot air;
a heating means that heats a gas for the drying process that includes the hot air generated by the heat pump; and
a temperature control means that controls a temperature of the gas for the drying process,
**characterized in that**:
a low-temperature-side heat source of the heat pump is a refrigerant that has directly or indirectly absorbed heat by cooling the steel material or the steel sheet.

2. The hot-air supply device according to claim 1, wherein
the hot-air supply device further comprises
a first control unit that controls, based on a hot-air supply temperature and hot air volume that are required for the drying process, a temperature and a flow rate of the hot air to be preheated by the heat pump, and an amount of energy to be used by the heating means that heats the gas for the drying process up to the required hot-air supply temperature, in view of an energy loss that occurs in a path from a source of generation of the energy in a business facility to a supply destination of the energy, so as to reduce net energy consumption.

3. The hot-air supply device according to claim 1 or 2, wherein
the low-temperature-side heat source of the heat pump is a refrigerant that has indirectly absorbed heat by cooling the steel material or the steel sheet via a heat exchanger, and
the device further comprises:
a flow-channel switching portion that switches flow channels for a heating medium in a heating-medium flow channel between the heat exchanger and the heat pump;
a measurement portion that measures an inlet heating-medium temperature T_{Ci} of the heating medium that enters the heat pump through the heating-medium flow channel; and
a second control unit that performs, based on T_{Ci} measured by the measurement portion, feedback control or feedforward control on a flow rate at the flow-channel switching portion so that T_{Ci} ≤ Tc is satisfied, where Tc is an upper limit of the inlet heating-medium temperature.

4. The hot-air supply device according to claim 1 or 2,
wherein:
the heating means is a heat exchanger that exchanges heat with steam, and
the temperature control means controls the temperature based on one or more in combination selected from a flow rate of the steam, operating power for the heat pump, and a flow rate of the gas having a temperature lower than the preset temperature to be mixed with the gas for the drying process.

5. A hot-air supply method comprising:
a first step of preheating a gas having a temperature lower than a preset temperature required for a drying process for a steel material or a steel sheet by a heat pump, thereby generating hot air; and
a second step of heating a gas for the drying process that includes the hot air generated in the first step while controlling a temperature of the hot air,
**characterized in that**:
in the first step, a refrigerant that has absorbed heat by cooling the steel material or the steel sheet is directly or indirectly used as a low-temperature-side heat source of the heat pump.

6. The hot-air supply method according to claim 5, further comprising controlling, based on a hot-air supply temperature and a hot air volume that are required for the drying process, a temperature and a flow rate of the hot air to be preheated by the heat pump, and an amount of energy to be used in the second step of heating the gas for the drying process up to the required hot-air supply temperature, in view of an energy loss that occurs in a path from a source of generation of the energy in a business facility to a supply destination of the energy, so as to reduce net energy consumption.

7. The hot-air supply method according to claim 5,
wherein:
in the first step, a refrigerant that has absorbed heat by cooling the steel material or the steel sheet is indirectly used as the low-temperature-side heat source of the heat pump via a heat exchanger,
a flow-channel switching portion that switches flow channels for a heating medium in a heating-medium flow channel between the heat exchanger and the heat pump is provided, and
an inlet heating-medium temperature T_{Ci} of the heating medium that enters the heat pump through the heating-medium flow channel is measured, and feedback control or feedforward control is performed on a flow rate at the flow-channel switching portion so that T_{Ci} ≤ Tc is satisfied, where Tc is an upper limit of the inlet heating-medium temperature.

8. The hot-air supply method according to claim 5,
wherein:
in the second step, steam is used as the heating means, and
the temperature of the hot air is controlled based on one or more of a flow rate of the steam, operating power for the heat pump, and a flow rate of the gas having a temperature lower than the preset temperature to be mixed with the gas for the drying process.

9. A method for producing steel, comprising a step of performing a drying process on a steel material or a steel sheet by generating hot air for the drying process using the hot-air supply method according to any one of claims 5 to 8.
